# EUROPEAN PATENT APPLICATION

(11) **EP 4 429 172 A1**
(43) Date of publication of application: **11.09.2024**
(21) Application number: 23161041.1
(22) Date of filing: 09.03.2023
(51) Int. Cl.: H04L 9/40, H04L 67/55, H04L 67/562

(54) **COMPUTER-IMPLEMENTED METHOD, COMPUTER PROGRAM PRODUCT AND PUBLISH-SUBSCRIBE SYSTEM FOR SECURE DATA TRANSMISSION**

(71) Applicant: Siemens Aktiengesellschaft, 80333 München (DE)
(72) Inventor: Hohl, Hubertus, 79219 Staufen (DE); Sauer, Markus, 81739 München (DE)
(74) Representative: Siemens Patent Attorneys

(57) **Abstract**

A computer-implemented method for secure data transmission in a publish-subscribe system including a confidentiality group management unit and a first communication unit is proposed. The method comprising:
a) transmitting a request for subscribing to a topic for receiving messages referring to said topic,
b) executing a verification for obtaining a verification result,
c) receiving, in response to the request, a cryptographically secured message referring to the subscribed topic,
d) if the verification result is positive and the first communication unit is a participant or an authority of the confidentiality group, providing, by the authority of the confidentiality group, the cryptographic material to the first communication unit, and
e) performing, by the first communication unit, a decryption scheme for decrypting the received cryptographically secured message by means of the cryptographic material.

## Description

The present invention relates to a computer-implemented method, a computer program product and a publish-subscribe system for secure data transmission.

Traditionally, system components can exchange data via a publish-subscribe system by using, for example, a "Message Queuing Telemetry Transport" (MQTT) protocol or a "Data Distribution Service" (DDS).

A typical example of such a publish-subscribe system is a micrologistics system, in which transport orders are negotiated and executed between e.g., ground- and air-bound autonomous driverless transport units. Each transport unit is represented by a system component, which includes components for the creation of an offer regarding an incoming transport order, for the calculation of the workload for the execution of a transport order as well as for the administration and actual execution of a transport order. These system components have to communicate with each other for performing the transport orders via the micrologistics system.

Similar scenarios can be found, for example, in energy management systems. Here, local different systems interact with each other in the sense of a locally distributed energy management (e.g., for a house or a building). At the same time, the locally distributed energy system interacts with other energy systems that are connected via an energy distribution network (e.g., a region, a street or a city).

If such scenarios are extended to an open platform and/or technical ecosystem in which the same publish-subscribe communication infrastructure is used for different applications, but also by different - possibly legally independent - users, the issue arises that all system components that interact with each other at the application level (OSI model, layer 7) via the publish-subscribe communication system can also read all the data that is transmitted.

To overcome this issue, it is known to use static keys for specific payloads published on specific subscriptions.

Furthermore, it is known to realize a central access management via topics. In this case, only system components with access rights for this topic receive the corresponding messages. However, this requires the prior configuration of infrastructure components of the publish-subscribe system used.

It is one object of the present invention to improve the data transmission in a publish-subscribe system.

According to a first aspect, a computer-implemented method for secure data transmission in a publish-subscribe system including a confidentiality group management unit and a first communication unit is proposed. The method comprises the steps:
a) transmitting, by the first communication unit, a subscription request for subscribing to a topic for receiving messages referring to said topic,
b) executing, by the confidentiality group management unit, a verification scheme for obtaining a verification result, wherein the verification result indicates whether the first communication unit is a participant or an authority of a confidentiality group specific for the subscribed topic,
c) receiving, in response to the subscription request transmitted in step a), by the first communication unit, a cryptographically secured message referring to the subscribed topic, wherein the cryptographically secured message is obtained by performing an encryption scheme for encrypting a message by means of a cryptographic material by a participant or an authority of the confidentiality group,
d) if the obtained verification result of step b) is positive and the first communication unit is a participant or an authority of the confidentiality group, providing, by the authority of the confidentiality group, the cryptographic material to the first communication unit, and
e) performing, by the first communication unit, a decryption scheme for decrypting the received cryptographically secured message by means of the cryptographic material.

Using the present computer-implemented method, only a participant or an authority of the confidentiality group which has the cryptographic material can encrypt the message or decrypt the cryptographically secured message referring to said topic .

With the above-described computer-implemented method, it is possible to examine whether a communication unit, for example, the first communication unit, is a participant or an authority of the confidentiality group. Only if the communication unit is a participant or an authority of the confidentiality group, the communication unit has the cryptographic material for encrypting the message or decrypting the cryptographically secured message referring to said topic.

This has the technical effect that a published message for said topic will be sent to all subscribers (all communication units) of this topic, but only those communication units, which are part of the confidentiality group as a participant or an authority, have the cryptographic material for encrypting the message or decrypting the cryptographically secured message referring to said topic.

This has the advantage that the protection goal of information security "confidentiality" is achieved since the above-described computer-implemented method according to the first aspect ensures that the published and transmitted messages are only accessible to authorized entities, for example, only if the respective communication unit is a participant or an authority of the confidentiality group. This also improves the overall information security of the publish-subscribe system since the data or message flows of said system can be isolated down to the smallest possible system participant, a communication unit.

The above-described computer-implemented method has the further advantage that it is possible to dynamically generate (implement) or change during the runtime of the publish-subscribe system at least a confidentiality group or multiple confidentiality groups for respective specific topics.

A further advantage of the above-described computer-implemented method is that it can be implemented on any publish-subscribe infrastructure - even on systems that are already in operation. In addition, based on new topics, it is possible to generate ad-hoc confidentiality groups specific for the respective new topic.

A computer-implemented method is a method which involves the use of a computer, a computer network or other programmable apparatus, where one or more features are realized wholly or partly by means of a computer program.

In particular, the publish-subscribe system includes one or more publisher that publishes messages including data and one or more subscriber that can subscribe to and receive the messages. Publishing and subscribing messages are topic-based. Therefore, the publish-subscribe system can be referred to as topic-based publish-subscribe system.

Preferably, the publish-subscribe system can be implemented within an automation plant. The automation plant can be a plant from the process industry, the chemical industry, the pharmaceutical industry, the petrochemical industry or a plant from the food and beverage industry. This also includes any plants from the manufacturing and production industry and plants in which, for example, cars or goods of any kind are produced. Furthermore, the automation plant can also be designed as an energy generation system, such as a wind turbine, a solar system or a power plant and/or as an energy distribution system. For example, the publish-subscribe system can also be implemented within a micrologistics system.

For example, the publish-subscribe system according to the first aspect uses the MQTT protocol, therefore the themes which can be subscribed are called "topics". Specifically, a topic refers to a specific content of a message. Preferably, a topic is a specific theme or a service of the publish-subscribe system, which is subscribable by a subscriber, for example, the first communication unit. Subscribers in a topic-based publish-subscribe system receive all (cryptographically secured) messages published to the topics to which they subscribe. In particular, the publish-subscribe system includes multiple different topics, for example, said topic, a second topic, a third topic, and so on. An example of a topic is "measured sensor values from a first communication unit", "measured sensor values from a second communication unit" or "measured actor movements from a third communication unit" which acts as an actor in the publish-subscribe system. For example, once a communication unit has obtained sensor values, these sensor values can then be published in form of a message referring to said topic.

A communication unit, for example, the first communication unit or the second communication unit, can either be a participant, no participant or an authority of the confidentiality group. If the respective communication unit is no participant of the confidentiality group, it has no way of obtaining access to the cryptographic material. Then, the respective communication unit cannot encrypt a message by means of the cryptographic material and cannot decrypt the cryptographically secured message by means of the cryptographic material. Preferably, prior to becoming a participant of the confidentiality group, the respective communication unit has to successfully authorize itself at the authority and has to receive permission from the authority to participate into the confidentiality group as a participant. After this authorization, this communication unit then receives the cryptographic material for decrypting or encrypting the messages for the respective topic of the confidentiality group from the authority. The communication unit cannot generate cryptographic material for a confidentiality group except it is the authority of the confidentiality group. In particular, each of the multiple confidentiality groups respectively has one authority which is responsible for the authorization of communication units which want to become a participant of the confidentiality group and for providing the cryptographic material to the authorized communication units.

Further, a respective communication unit, for example, the first communication unit, can be embodied as a field device. For example, the field device can be a field device in an automation system or an automation plant. The field device can be an IoT-device (Internet-of-Things). In particular, a field device is a hardware- and/or software-implemented unit that has or provides a specific functionality. Examples of field devices include sensors, actors, robots, measurement devices, computers, and the like. Sensors can also be attached to field devices. In particular, such field devices include control computers or microcontrollers, such as a fieldprogrammable gate array (FPGA). A field device can also be a single controller or a single device. However, a field device may also have a plurality of controllers or functional units that are, for example, structurally connected and/or can functionally interact with each other. In this case, each controller or functional unit combined in the field device can be regarded as a field device linked to and/or dependent on the other controllers or functional units.

Preferably, the subscription request is a request that is transmitted by a communication unit, for example, the first communication unit, for subscribing to messages and/or data relating to a specific topic published in the publish-subscribe system, for example, said topic.

In particular, a verification scheme is a procedure for verifying whether a communication unit is part of the confidentiality group. In particular, it includes the step of examining whether an entry for the confidentiality group already exists in the confidentiality group management unit.

The authority is also referred to as responsible or competent of the confidentiality group. Preferably, a communication unit which is an authority is the only communication unit which can provide the cryptographic material to participants of the confidentiality group of the publish-subscribe system. In the computer-implemented method according to the first aspect, the authority may be the first communication unit or the second communication unit. Further, it is also possible that the authority of the confidentiality group is a third communication unit or further communication units in the publish-subscribe system such as a fourth or fifth communication unit. Although each participant of the confidentiality group can decrypt and encrypt the message and each participant can be subscriber and publisher of said topic, only the authority can generate the cryptographic material and provide the cryptographic material to the other participants of the confidentiality group.

A confidentiality group is a group which is specific and unique for a specific topic. In particular, the publish-subscribe system includes multiple confidentiality groups such as a second confidentiality group and/or a third confidentiality group or further confidentiality groups. The second confidentiality group is specific for the second topic and the third confidentiality group is specific for the third topic. Each topic in the publish-subscribe system is assigned to only one confidentiality group. Preferably, each confidentiality group of the multiple confidentiality groups is isolated from the environment, in particular from the other confidentiality groups. Further, each confidentiality group fulfills the protection goal of information security "confidentiality".

Specifically, a message and a cryptographically secured message include data referring to said topic.

Further, it is possible that an authority of a confidentiality group signs off or has an unscheduled absence. Then, in this case, there are different possibilities to proceed further. A first possibility is that the confidentiality group cannot longer be used. A second possibility is that the confidentiality group implements its management decentral. A third possibility is that the confidentiality group can use a leader follower procedure, in which a new leader (new authority) is elected as soon as the current leader (authority) fails.

The respective unit, e.g., the confidentiality group management unit, may be implemented in hardware and/or in software. If said unit is implemented in hardware, it may be embodied as a device, e.g., as a computer or as a processor or as a part of a system, e.g., a computer system. If said unit is implemented in software it may be embodied as a computer program product, as a function, as a routine, as a program code or as an executable object.

According to an embodiment, step a) further includes:
transmitting, by the first communication unit, a participation request for participation to the confidentiality group, to the confidentiality group management unit,
wherein the executing of the verification scheme of step b) includes the step:
   examining, in response to the transmitted participation request, whether an entry for the confidentiality group is included in the confidentiality group management unit for obtaining a positive or a negative examining result, wherein the examining result is positive if an entry for the confidentiality group is included in the confidentiality group management unit and the examining result is negative if an entry for the confidentiality group is missing.

Preferably, the authorization material is included in the participation request or in the further participation request. In particular, each communication unit, for example, the first communication unit, has authorization material including a unique digital signature of the respective communication unit for executing the authorization of the communication unit. The executing of the authorization can include an examination whether the communication unit is really the communication unit it claims to be in dependence on the unique digital signature. In particular, if the communication unit is really the communication unit it claims to be, then the authorization result is positive otherwise it is negative. Preferably, the participation request and/or the further participation request includes the authorization material. Specifically, it is also possible to transmit the subscription request and the participant request or further participation request as one single request instead of two different requests.

Preferably, an entry is information indicating whether a specific confidentiality group exists or is missing in the confidentiality group management unit. Each entry of each confidentiality group can be stored in storage unit of the confidentiality group management unit. Further, the entry can include more information regarding the confidentiality group. For example, the entry can include information indicating the authority and the participants of a specific confidentiality group and the cryptographic material of the specific confidentiality group.

According to a further embodiment, the publish-subscribe system further includes a second communication unit, wherein if the examining result is positive, step b) further includes:
receiving, by the first communication unit, a responsibility message indicating that the second communication unit is the authority of the confidentiality group,
transmitting, by the first communication unit, a further participation request for participation into the confidentiality group to the second communication unit,
executing, in response to the transmitted further participation request, an authorization of the first communication unit in dependence on authorization material for obtaining an authorization result, and
if the authorization result is positive, adding the first communication unit as a participant to the confidentiality group for obtaining a positive verification result based on the executed verification scheme.

Specifically, the first communication unit obtains the positive verification result since an entry for the confidentiality group for the subscribed topic is included in the confidentiality group management unit and the first communication unit is a participant of the confidentiality group. In this embodiment, an entry for the confidentiality group exists or is present in the confidentiality group management unit and therefore the confidentiality group exists. Preferably, the confidentiality group management unit includes an authority of the confidentiality group. In this case, it is the second communication unit.

According to a further embodiment, if the examining result is positive, step b) further includes:
if the authorization result is positive, securely transmitting, by the second communication unit, an encrypted cryptographic material to the first communication unit, and
storing, by the first communication unit, the securely transmitted encrypted cryptographic material for the confidentiality group in a storage space of the first communication unit.

In particular, the term "securely transmitting" means that the cryptographic material is encrypted by the authority, for example, the second communication unit or the first communication unit, prior to the transmitting to the respective participant.

After successful authorization, the first communication unit is a participant of the confidentiality group and entitled to receive the cryptographic material. In this embodiment, the second communication unit as the authority encrypts the cryptographic material by means of cryptographic entities for obtaining an encrypted cryptographic material. Cryptographic entities can include cryptographic keys, for example, a public and/or a private key of the first communication unit and/or the second communication unit or a symmetrical key. For example, the second communication unit encrypts the cryptographic material with the public key of the first communication unit for obtaining the encrypted cryptographic material. Then, the second communication unit securely transmits the encrypted cryptographic material to the first communication unit.

Afterwards, after the successful authorization of the first communication unit, the first communication unit can request via an interface unit, for example, of the second communication unit, the cryptographic entities. By means of the requested cryptographic entities, the first communication unit then receives information indicating how the cryptographic material has been encrypted by the second communication unit. Then, preferably, the first communication unit receives from the second communication unit, the cryptographic entities and/or information indicating the used cryptographic entities for decrypting the encrypted cryptographic material. Next, the first communication unit can decrypt the encrypted cryptographic material with its private key and has then access to the cryptographic material for decrypting the cryptographically secured message.

Preferably, the responsibility message further includes information indicating metadata for an interface unit such as an application endpoint and/or a communication protocol the second communication unit uses. Specifically, each respective communication unit of the publish-subscribe system, for example, at least the first communication unit, the second communication unit, the third communication unit and/or the fourth communication unit, includes a respective interface unit. The respective communication unit can request via the interface unit the cryptographic entities and/or information indicating the used cryptographic entities for decrypting the encrypted cryptographic material from the authority. Further, via the interface unit of the respective communication unit, it is also possible to transmit the cryptographic entities and/or information indicating the used cryptographic entities to participants of the confidentiality group for decrypting the cryptographic material encrypted by the second communication unit in the case if the second communication unit is the authority of the confidentiality group.

According to a further embodiment, if the examining result is positive, step b) further includes:
performing, by the second communication unit as the authority of the confidentiality group, the encryption scheme for encrypting the message by means of the cryptographic material for obtaining the cryptographically secured message.

According to a further embodiment, the method further includes:
h) performing, by the first communication unit, the encryption scheme for encrypting another message by means of decrypted cryptographic material, and
i) publishing, by the first communication unit, the another message referring to said topic.

In this embodiment, the first communication unit is a publisher of the another message referring to said topic. Preferably, the first communication unit generates the another message.

Thus, this has the advantage that in the publish-subscribe system, each communication unit, for example, the first communication unit or the second communication, can be subscriber and publisher at the same time in dependence whether the respective communication unit is a participant or an authority.

Preferably, as a participant, the respective communication unit is able to act as a publisher and publish another (encrypted) message referring to said topic which is encrypted with the cryptographic material of the confidentiality group. Moreover, as an authority, the respective communication unit can also publish cryptographically secured messages referring to said topic. Also, the respective communication unit can subscribe to a second topic of a second confidentiality group. For example, if the authority of the confidentiality group is a participant of the second confidentiality group, it is able to decrypt the cryptographically secured messages referring to the second topic.

Preferably, the respective communication unit, for example, the first communication unit or the second communication unit, can transmit a publication request for publishing messages and/or data relating to a specific topic of the publish-subscribe system, for example, said topic. In particular, the publication request is transmitted to a broker unit of the publish-subscribe system.

If the respective communication unit has measured sensor or actor values relating to said topic, the respective communication unit can publish messages referring to said topic. In this case, the respective communication unit transmits a publication request. Also in this case, the respective communication unit is a publisher of the message referring to said topic.

It should be noted that the computer-implemented method according to the first aspect and its embodiments can also be used analog to the case of the subscription request, in the case of a publication request. For example, a publisher, such as the first communication unit, may encrypt a generated message with the cryptographic material of the confidentiality group and then may publish the message. Other subscribers to the message, for example, the second communication unit, must then be participants or the authority of the confidentiality group in order to be able to decrypt this message by means of the cryptographic material of the confidentiality group.

According to a further embodiment, if the examining result is negative, step b) further includes:
generating, by the first communication unit, a confidentiality group and assigning the first communication unit as the authority of the confidentiality group,
generating, by the first communication unit, the cryptographic material, and
obtaining, by the first communication unit as the authority of the confidentiality group, a positive verification result based on the executed verification scheme.

The above assigning of the first communication unit as the authority of the confidentiality group and thus the assigning of the responsibility for the cryptographic material specific for the confidentiality group to the first communication unit can be implemented in a central manner by means of a (central) broker unit, by the confidentiality group management unit but also without a broker unit in a decentralized managed publish-subscribe system. Preferably, at the decentralized managed publish-subscribe system, all communication units in the publish-subscribe system implement a distributed database for the authority or responsibility for the confidentiality group, which is synchronized between all communication units by means of a consensus scheme, for example, RAFT or PAXOS.

In particular, the first communication unit obtains the positive verification result since the first communication unit has generated the confidentiality group as the authority.

According to a further embodiment, if the examining result is negative, step b) further includes:
generating, by the first communication unit, the cryptographic material for performing the encryption scheme for encrypting the message for obtaining the cryptographic secured message by means of the cryptographic material, and/or for performing another encryption scheme for encrypting another message for obtaining another cryptographic secured message.

According to a further embodiment, if the examining result is negative, step b) further includes:
providing, by the first communication unit, via the interface unit of the first communication unit, the cryptographic entities and/or the encrypted cryptographic material upon successful authorization of other communication units at the first communication unit, to the other communication units.

Specifically, the first communication unit also provides metadata for the interface unit of the first communication unit such as an application endpoint and/or a communication protocol, to the other communication units, for example, the second communication unit. In this embodiment, the second communication unit can be a participant of the confidentiality group.

In particular, if the publish-subscribe system includes a broker unit, then the broker unit assigns the first communication unit as the authority of the confidentiality group. In addition, the broker unit assigns the responsibility for the cryptographic material specific for the confidentiality group by means of the digital signature of the first communication unit to the first communication unit. Further, the broker unit can transmit a notification to the first communication unit indicating that the first communication unit is now the authority of the confidentiality group. The same applies equally to the second and/or the third communication unit in dependence on which of these communication units is the authority.

According to a further embodiment, the method further includes the step:
f) generating, by the first communication unit or the second communication unit, the confidentiality group during the runtime of the publish-subscribe system and/or changing an authority for the confidentiality group during the runtime of the publish-subscribe system.

This embodiment has the advantage that it is possible to dynamically generate (implement) or change during the runtime of the publish-subscribe system at least a confidentiality group or multiple confidentiality groups for respective specific topics.

In particular, the confidentiality group can also be generated by the first communication unit or the second communication unit in the design stage of the publish-subscribe system.

The changing of the authority, for example, if the first communication unit is the authority from the first communication unit to the second communication unit, during the runtime of the publish-subscribe system can be performed by the confidentiality group management unit.

According to a further embodiment, the publish-subscribe system further includes a broker unit, wherein step a) further includes:
transmitting the subscription request to the broker unit,
wherein step c) further includes:
   receiving, in response to the transmitted subscription request, the cryptographically secured message from the broker unit.

The publish-subscribe system according to the first aspect can be implemented including a broker unit (central publish-subscribe architecture) or can be implemented without including the broker unit (brokerless publish-subscribe architecture) .

According to this embodiment above, the publish-subscribe system further includes the broker unit and is therefore implemented in a central publish-subscribe architecture. In particular, in this case, the providers of information (publishers) have no direct link to specific consumers of that information (subscribers), but the interactions between publishers and subscribers are controlled by the broker unit. That is, within the publish-subscribe system using a broker unit, the respective communication units, for example, the first, the second and/or the third communication units, are loosely coupled and communicate only via the broker unit and not directly with each other. Specifically, publications (messages) are sent from publishers to the broker unit and subscriptions are sent from subscribers to the broker unit, and the broker unit forwards the publications to the subscribers.

Moreover, if the publish-subscribe system includes a broker unit, the broker unit transmits the responsibility message to the first communication unit and/or the first or the second communication unit transmits the subscription request to the broker unit.

According to a further embodiment, the confidentiality group management unit is implemented in the broker unit.

In this case, the broker unit manages the confidentiality group with its responsibilities (participants, authority) and the assigned cryptographic entities, the cryptographic material and also the topics and their subscribers and publishers.

According to a further embodiment, the confidentiality group management unit is implemented in a server of the publish-subscribe system, wherein the confidentiality group management unit is external to the broker unit and is external to the first communication unit and the second communication unit.

In this embodiment, the confidentiality group management unit is neither implemented in the broker unit nor in one of the communication units but instead in the server.

According to a further embodiment, the confidentiality group management unit is subdivided into at least a first confidentiality group management unit part and a second confidentiality group management unit part, wherein the first confidentiality group management unit part is implemented in the first communication unit and the second confidentiality group management unit part is implemented in the second communication unit.

According to a further embodiment, the broker unit is subdivided into at least a first broker unit part and a second broker unit part, wherein the first broker unit part is implemented in the first communication unit and the second broker unit part is implemented in the second communication unit.

If the publish-subscribe system is implemented without including the broker unit (brokerless publish-subscribe architecture), all communication units which are involved in the publish-subscribe system, can implement a distributed database for deciding the responsibility, i.e., which communication unit is a participant or which is an authority, and/or for managing the confidentiality group and the associated cryptographic entities and cryptographic material. For this purpose, the confidentiality group management unit and the broker unit are subdivided into different parts, respectively (referring to the further embodiment above). Then, the information in the subdivided confidentiality group management unit parts and in the subdivided broker unit parts can be synchronized between all communication units by means of the consensus scheme. In particular, in this case, the providers of information (publishers) have a direct communication link to specific consumers of that information (subscribers). That is, within the publish-subscribe system without a broker unit, the respective communication units, for example, the first, the second and/or the third communication units, are directly coupled and can directly communicate between each other.

Preferably, each further communication unit, for example, a third and/or a fourth communication unit can also include a part of the broker unit and/or a part of the confidentiality group management unit, for example, a third broker unit part and a third confidentiality group management unit part.

According to a further embodiment, the confidentiality group management unit including a second confidentiality group, wherein the second confidentiality group is specific for a second subscribed topic.

This embodiment has the advantage that a communication unit, for example, the first communication unit, can be at the same time a participant in multiple different confidentiality groups, for example, the confidentiality group and the second confidentiality group. Thus, an overlapping participation of communication units in any number of confidentiality groups is possible. This allows an even more targeted encrypted communication in the publish-subscribe system.

According to a further embodiment, the method further includes:
generating, by the first communication unit or the second communication unit, further cryptographic material, wherein the cryptographic material including first key material and the further cryptographic material including second key material, wherein a further message referring to the second subscribed topic is encrypted by performing a further encryption scheme by means of the further cryptographic material.

This embodiment has the advantage that depending on the required information technology security level, it is possible to use encryption/decryption schemes and cryptographic material adapted to this. This increases the communication security in the publish-subscribe system for the various confidentiality groups.

First key material and/or second key material can include a public/private key pair of an asymmetric-key encryption/decryption or a cryptographic key of a symmetric-key encryption/decryption.

Further, the cryptographic entities can also include asymmetric-key encryption/decryption and/or symmetric-key encryption/decryption.

In particular, an encryption and/or decryption scheme is formed as an asymmetric-key encryption/decryption scheme, as a symmetric-key encryption/decryption scheme and/or as a quantum encryption/decryption scheme. Preferably, a quantum encryption/decryption scheme can be referred to as quantum key distribution (QKD).

In this embodiment, different cryptographic materials are used simultaneously for different confidentiality groups. For example, the cryptographic material is formed as quantum key distribution and/or the further cryptographic material is formed as asymmetrical cryptography, such as Advanced Encryption Standard (AES), or symmetrical cryptography.

In this case, the confidentiality group can be assigned to a first confidentiality category and the further confidentiality group can be assigned to a second confidentiality category. The different confidentiality category can respectively correlate with different costs of financial or computational resources. Thus, a confidentiality group assigned to the first confidentiality category can be more cost intensive with respect to financial and/or computational resources than a confidentiality group assigned to the second confidentiality category. But, due to the cost intensity, the confidentiality group assigned to the first confidentiality category has a higher security level than the confidentiality group assigned to the second confidentiality category. Thus, messages in the confidentiality group assigned to the first confidentiality category can be encrypted with the cryptographic material and messages in the confidentiality group assigned to the second confidentiality category can be encrypted with the further cryptographic material.

According to a further embodiment, the method further includes the step:
g) denying, if the verification result of step b) is negative, the access to the content of the received cryptographically secured message for the first communication unit.

In addition, the access can also be denied if the verification result of step b) is negative and the first communication unit is no participant or no authority of the confidentiality group.

Any embodiment of the first aspect may be combined with any embodiment of the first aspect to obtain another embodiment of the first aspect.

According to a second aspect, a computer program product is proposed which comprises a program code for executing the above-described computer-implemented method according to the first aspect or an embodiment of the first aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a publish-subscribe system for secure data transmission is proposed. The system including:
a confidentiality group management unit, and
a first communication unit, wherein the first communication unit is configured to:
   transmit a subscription request for subscribing to a topic for receiving messages referring to said topic, wherein the confidentiality group management unit is configured to:
   execute a verification scheme for obtaining a verification result, wherein the verification result indicates whether the first communication unit is a participant or an authority of a confidentiality group specific for the subscribed topic,
wherein the first communication unit is further configured to:
receive, in response to the transmitted subscription request, a cryptographically secured message referring to the subscribed topic, wherein a participant or an authority of the confidentiality group is configured to obtain the cryptographically secured message by performing an encryption scheme for encrypting a message by means of a cryptographic material, and
if the verification result is positive and the first communication unit is a participant or an authority of the confidentiality group, the authority of the confidentiality group is configured to provide the cryptographic material to the first communication unit, wherein the first communication unit is configured to:
   perform a decryption scheme for decrypting the received cryptographically secured message by means of the cryptographic material.

The technical effects and advantages described for the computer-implemented method according to the first aspect apply equally to the publish-subscribe system according to the third aspect.

Further, embodiments and features described with reference to the computer-implemented method according to the first aspect apply mutatis mutandis to the publish-subscribe system according to the third aspect.

According to an embodiment of the publish-subscribe system, the first communication unit or a second communication unit is configured to:
generate the confidentiality group during the runtime of the publish-subscribe system, and/or
wherein the confidentiality group management unit is configured to:
   change an authority for the confidentiality group during the runtime of the publish-subscribe system.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention. Independent of the grammatical term usage, individuals with male, female or other gender identities are included within the term.

Further embodiments, features and advantages of the present invention will become apparent from the subsequent description and dependent claims, taken in conjunction with the accompanying drawings, in which:
- Fig. 1: shows a block diagram of a publish-subscribe system for secure data transmission according to an embodiment;
- Fig. 2: shows a schematic flowchart of a computerimplemented method for secure data transmission in a publish-subscribe system according to an embodiment; and
- Fig. 3: shows a schematic flowchart of a computerimplemented method for secure data transmission in a publish-subscribe system according to a further embodiment.

In the Figures, like reference numerals designate like or functionally equivalent elements, unless otherwise indicated.

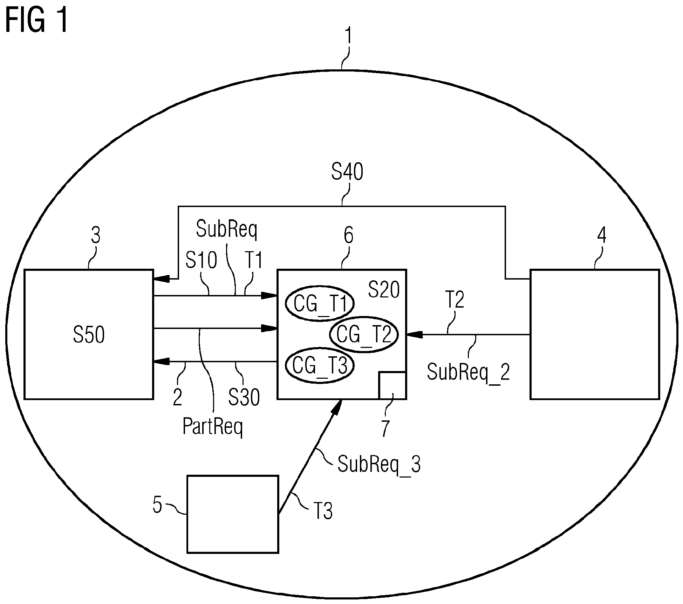

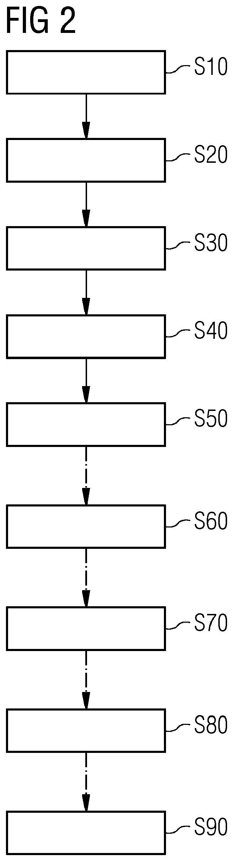

Fig. 1 shows a block diagram of a publish-subscribe system 1 for secure data transmission according to an embodiment. The publish-subscribe system 1 includes a first communication unit 3, a second communication unit 4, a third communication unit 5, a broker unit 6 and a confidentiality group management unit 7. Thus, the publish-subscribe system 1 according to Fig. 1 is implemented as a central publish-subscribe architecture. Further, in Fig. 1, the confidentiality group management unit 7 is implemented in the broker unit 6. In addition, references to the method steps of Fig. 2, which describes a computer-implemented method for secure data transmission in a publish-subscribe system 1, are indicated in parentheses in the following explanations of Fig. 1.

In Fig. 1, the first communication unit 3 is configured to transmit a subscription request SubReq for subscribing to a topic T1 for receiving messages referring to said topic T1 to the broker unit 6 (see also method step S10 of Fig. 2).

Moreover, the first communication unit 3 is configured to transmit a participation request PartReq for participation to the confidentiality group CG_T1, to the confidentiality group management unit 7 included in the broker unit 6.

Further, the confidentiality group management unit 7 is configured to execute a verification scheme for obtaining a verification result, wherein the verification result indicates whether the first communication unit 3 is a participant or an authority of a confidentiality group CG_T1 specific for the subscribed topic T1 (see also method step S20 of Fig. 2).

Then, the first communication unit 3 is further configured to receive, in response to the transmitted subscription request SubReq, a cryptographically secured message 2 referring to the subscribed topic T1 from the broker unit 6. Moreover, a participant or an authority of the confidentiality group CG_T1 is configured to obtain the cryptographically secured message 2 by performing an encryption scheme for encrypting a message by means of a cryptographic material (see also method step S30 of Fig. 2).

Afterwards, if the verification result is positive and the first communication unit 3 is a participant or an authority of the confidentiality group CG_T1, the authority of the confidentiality group CG_T1 is configured to provide a cryptographic material including first key material to the first communication unit 3 (see also method step S40 of Fig. 2). In Fig. 1, the authority is the second communication unit 4 (see also the arrow marked with S40 from the second communication 4 to the first communication unit 3). In embodiments, also the broker unit 6 is configured to provide the cryptographic material to the first communication unit 3 (not shown).

Next, the first communication unit 3 is configured to perform a decryption scheme for decrypting the received cryptographically secured message 2 by means of the cryptographic material (see also method step S50 of Fig. 2).

In addition, the first communication unit 3 or the second communication unit 4 is configured to generate the confidentiality group CG_T1 during the runtime of the publish-subscribe system 1. Further, the confidentiality group management unit 7 is configured to change an authority for the confidentiality group CG_T1 during the runtime of the publish-subscribe system 1 (see also method step S60 of Fig. 2).

Moreover, if the verification result is negative, the access to the content of the received cryptographically secured message 2 for the first communication unit 3 is denied (see also method step S70 of Fig. 2).

Also, the first communication unit 3 is configured to perform an encryption scheme for encrypting another message by means of decrypted cryptographic material (see method step S80 of Fig. 2) and is configured to publish the another message referring to said topic T1 (see method step S90 of Fig. 2).

Further, in Fig. 1, also a second confidentiality group CG_T2 and a third confidentiality group CG_T3 are included in the confidentiality group management unit 7.

The explanations described above with regard to the confidentiality group CG_T1, topic T1 and the cryptographic material apply in the same way to the second confidentiality group CG_T2 specific for the second topic T2 and the further cryptographic material as well as the confidentiality group CG_T3 specific for the third topic T3 and another cryptographic material. This is explained in detail in Fig. 1 based on the second confidentiality group CG_T2 specific for the second topic T2.

In Fig. 1, the second communication unit 4 is configured to transmit a further subscription request SubReq_2 for subscribing to the topic T2 for receiving messages referring to said topic T2. Then, the confidentiality group management unit 7 is configured to execute a further verification scheme for obtaining a further verification result, wherein the verification result indicates whether the second communication unit 4 is a participant or an authority of the second confidentiality group CG_T2 specific for the subscribed topic T2. Afterwards, the second communication unit 4 is further configured to receive, in response to the transmitted further subscription request SubReq_2, a further cryptographically secured message referring to the subscribed second topic T2. Then, the authority is configured to generate further cryptographic material including second key material. In Fig. 1, the first communication unit 3 is the authority of the second confidentiality group CG_T2. Next, a further message referring to the second subscribed topic T2 is encrypted by the first communication unit 3 by performing a further encryption scheme by means of the further cryptographic material.

Afterwards, if the verification result is positive and the second communication unit 4 is a participant or an authority of the second confidentiality group CG_T2, the authority of the confidentiality group CG_T2 is configured to provide the further cryptographic material to the second communication unit 4 (not shown). Next, the second communication unit 4 is configured to perform a further decryption scheme for decrypting the received further cryptographically secured message by means of the further cryptographic material.

The above example which is based on the second confidentiality group CG_T2 specific for the second topic T2 also applies equally to the third confidentiality group CG_T3 specific for the third topic T3 in dependence on another subscription request SubReq_3 and another cryptographic material.

It is also possible that each or only one of the communication units can subscribe to multiple topics, for example, the topic T1 and the topic T2. In this case, the respective communication unit is participant or authority in multiple confidentiality groups, for example, the confidentiality group CG_T1 and the second confidentiality group CG_T2.

In embodiments, the confidentiality group management unit 7 is subdivided into a first confidentiality group management unit part and a second confidentiality group management unit part (not shown), wherein the first confidentiality group management unit part is implemented in the first communication unit 3 and the second confidentiality group management unit part is implemented in the second communication unit 4.

Fig. 2 shows a schematic flowchart of a computer-implemented method for secure data transmission in a publish-subscribe system 1 (see Fig. 1) including a confidentiality group management unit 7 (see Fig. 1) and a first communication unit 3 (see Fig. 1) according to an embodiment. The respective method steps S10 - S50 of the computer-implemented method have already been explained above in terms of Fig. 1, which is why, in order to avoid repetitions, the method steps S10 - S50 are not explained again. This also applies to the method steps S60 - S90 which are embodiments of the method steps S10 - S50 of the computer-implemented method and are thus connected to the method steps S10 - S50 in Fig. 2 via respective dashed lines including at one end an arrow.

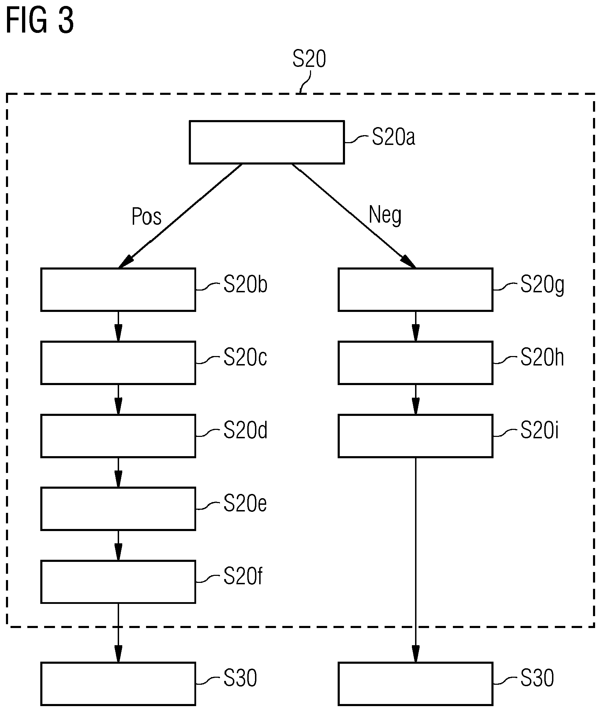

Fig. 3 shows a schematic flowchart of a computer-implemented method for secure data transmission in a publish-subscribe system 1 (see Fig. 1) according to a further embodiment.

Based on Fig. 3, the executing of the verification scheme of step S20 (see Fig. 2), in particular the examining according to step S20a, is explained in detail.

The executing of the verification scheme of step S20 includes the method step S20a. The method step S20a includes examining, in response to the transmitted participation request PartReq (see Fig. 1), whether an entry for the confidentiality group CG_T1 (see Fig. 1) is included in the confidentiality group management unit 7 (see Fig. 1) for obtaining a positive or a negative examining result Pos, Neg.

In this regard, the examining result is positive Pos if an entry for the confidentiality group CG_T1 is included in the confidentiality group management unit 7 and the examining result is negative Neg if an entry for the confidentiality group CG_T1 is missing.

These two cases, namely if the examining result is positive Pos and if the examining result is negative Neg, are described in the following based on method steps S20b - S20i in Fig. 3.

If the examining result is positive Pos, step S20 further includes the method steps S20b - S20f.

In method step S20b, a responsibility message indicating that the second communication unit 4 (see Fig. 1) is the authority of the confidentiality group CG_T1 is received by the first communication unit 3 (see Fig. 1).

Further, in method step S20c, a further participation request for participation into the confidentiality group CG_T1 to the second communication unit 4 is transmitted by the first communication unit.

Moreover, in method step S20d, in response to the transmitted further participation request, an authorization of the first communication unit 3 is executed in dependence on authorization material for obtaining an authorization result.

Afterwards, in method step S20e, if the authorization result is positive, the first communication unit 3 is added as a participant to the confidentiality group CG_T1 for obtaining a positive verification result based on the executed verification scheme.

Then, in method step S20f, an encryption scheme for encrypting the message by means of the cryptographic material for obtaining the cryptographically secured message 2 (see Fig. 1) is performed by the second communication unit 4 as the authority of the confidentiality group CG_T1.

After performing the method step S20f, the method of Fig. 3 continuous with the method step S30 (see Figs. 1 and 2).

Now, the other case is described, in which the examining result is negative Neg. In this case, step S20 further includes the method steps S20g - S20i.

In method step S20g, a confidentiality group CG_T1 is generated by the first communication unit 3 and the first communication unit 3 is assigned as the authority of the confidentiality group CG_T1.

Further, in method step S20h, the first communication unit 3 generates the cryptographic material.

Then, in method step S20i, the first communication unit 3 as the authority of the confidentiality group CG_T1 obtains a positive verification result based on the executed verification scheme.

After performing the method step S20i, the method of Fig. 3 continuous with the method step S30 (see Figs. 1 and 2).

Although the present invention has been described in accordance with preferred embodiments, it is obvious for the person skilled in the art that modifications are possible in all embodiments.

### Reference Numerals:

- 1: publish-subscribe system
- 2: cryptographically secured message
- 3: first communication unit
- 4: second communication unit
- 5: third communication unit
- 6: broker unit
- 7: confidentiality group management unit

- CG_T1: confidentiality group for topic T1
- CG_T2: confidentiality group for topic T2
- CG_T3: confidentiality group for topic T3
- Neg: negative examining result
- PartReq: participation request
- Pos: positive examining result
- SubReq: subscription request
- SubReq_2: further subscription request
- SubReq_3: another subscription request
- T1: topic
- T2: second topic
- T3: third topic
- S10 - S90: method steps
- S20a - S20i: method steps

## Claims

1. Computer-implemented method for secure data transmission in a publish-subscribe system (1) including a confidentiality group management unit (7) and a first communication unit (3), the method comprising:
a) transmitting (S10), by the first communication unit (3), a subscription request (SubReq) for subscribing to a topic (T1) for receiving messages referring to said topic (T1),
b) executing (S20), by the confidentiality group management unit (7), a verification scheme for obtaining a verification result, wherein the verification result indicates whether the first communication unit (3) is a participant or an authority of a confidentiality group (CG_T1) specific for the subscribed topic (T1),
c) receiving (S30), in response to the subscription request (SubReq) transmitted in step a) (S10), by the first communication unit (3), a cryptographically secured message (2) referring to the subscribed topic (T1), wherein the cryptographically secured message (2) is obtained by performing an encryption scheme for encrypting a message by means of a cryptographic material by a participant or an authority of the confidentiality group (CG_T1),
d) if the obtained verification result of step b) (S20) is positive and the first communication unit (3) is a participant or an authority of the confidentiality group (CG_T1), providing (S40), by the authority of the confidentiality group (CG_T1), the cryptographic material to the first communication unit (3), and
e) performing (S50), by the first communication unit (3), a decryption scheme for decrypting the received cryptographically secured message (2) by means of the cryptographic material.

2. The method according to claim 1,
**characterized in**
**that** step a) (S10) further includes:
transmitting, by the first communication unit (3), a participation request (PartReq) for participation to the confidentiality group (CG_T1), to the confidentiality group management unit (7),
wherein the executing of the verification scheme of step b) (S20) includes the step:
examining (S20a), in response to the transmitted participation request (PartReq), whether an entry for the confidentiality group (CG_T1) is included in the confidentiality group management unit (7) for obtaining a positive (Pos) or a negative (Neg) examining result, wherein the examining result is positive (Pos) if an entry for the confidentiality group (CG_T1) is included in the confidentiality group management unit (7) and the examining result is negative (Neg) if an entry for the confidentiality group (CG_T1) is missing.

3. The method according to claim 2,
**characterized in**
**that** the publish-subscribe system (1) further includes a second communication unit (4), wherein if the examining result is positive (Pos), step b) (S20) further includes:
receiving (S20b), by the first communication unit (3), a responsibility message indicating that the second communication unit (4) is the authority of the confidentiality group (CG_T1),
transmitting (S20c), by the first communication unit (3), a further participation request for participation into the confidentiality group (CG_T1) to the second communication unit (4),
executing (S20d), in response to the transmitted further participation request, an authorization of the first communication unit (3) in dependence on authorization material for obtaining an authorization result, and
if the authorization result is positive, adding (S20e) the first communication unit (3) as a participant to the confidentiality group (CG_T1) for obtaining a positive verification result based on the executed verification scheme.

4. The method according to claim 3,
**characterized in**
**that** if the examining result is positive (Pos), step b) (S20) further includes:
performing (S20f), by the second communication unit (4) as the authority of the confidentiality group (CG_T1), the encryption scheme for encrypting the message by means of the cryptographic material for obtaining the cryptographically secured message (2).

5. The method according to claim 2,
**characterized in**
**that** if the examining result is negative (Neg), step b) (S20) further includes:
generating (S20g), by the first communication unit (3), a confidentiality group (CG_T1) and assigning the first communication unit (3) as the authority of the confidentiality group (CG_T1),
generating (S20h), by the first communication unit (3), the cryptographic material, and
obtaining (S20i), by the first communication unit (3) as the authority of the confidentiality group (CG_T1), a positive verification result based on the executed verification scheme.

6. The method according to one of claims 1 - 5, **characterized by**:
f) generating (S60), by the first communication unit (3) or the second communication unit (4), the confidentiality group (CG_T1) during the runtime of the publish-subscribe system (1) and/or changing an authority for the confidentiality group (CG_T1) during the runtime of the publish-subscribe system (1).

7. The method according to one of claims 1 - 6, **characterized in**
**that** the publish-subscribe system (1) further includes a broker unit (6), wherein step a) (S10) further includes:
transmitting the subscription request (SubReq) to the broker unit (6),
wherein step c) (S30) further includes:
receiving, in response to the transmitted subscription request (SubReq), the cryptographically secured message (2) from the broker unit (6).

8. The method according to claim 7,
**characterized in**
**that** the confidentiality group management unit (7) is implemented in the broker unit (6).

9. The method according to claim 7,
**characterized in**
**that** the confidentiality group management unit (7) is subdivided into at least a first confidentiality group management unit part and a second confidentiality group management unit part, wherein the first confidentiality group management unit part is implemented in the first communication unit (3) and the second confidentiality group management unit part is implemented in the second communication unit (4).

10. The method according to one of claims 1 - 9,
**characterized in**
**that** the confidentiality group management unit (7) including a second confidentiality group (CG_T2), wherein the second confidentiality group (CG_T2) is specific for a second subscribed topic (T2).

11. The method according to claim 10,
**characterized in**
**that** the method further includes:
generating, by the first communication unit (3) or the second communication unit (4), further cryptographic material, wherein the cryptographic material including first key material and the further cryptographic material including second key material, wherein a further message referring to the second subscribed topic (T2) is encrypted by performing a further encryption scheme by means of the further cryptographic material.

12. The method according to one of claims 1 - 11, **characterized by**:
g) denying (S70), if the verification result of step b) (S20) is negative, the access to the content of the received cryptographically secured message (2) for the first communication unit (3).

13. The method according to one of claims 1 - 12, **characterized by**:
h) performing (S80), by the first communication unit (3), the encryption scheme for encrypting another message by means of decrypted cryptographic material, and
i) publishing (S90), by the first communication unit (3), the another message referring to said topic (T1).

14. A computer program product comprising a program code for executing the computer-implemented method according to one of claims 1 - 13 when run on at least one computer.

15. Publish-subscribe system (1) for secure data transmission, including:
a confidentiality group management unit (7), and
a first communication unit (3), wherein the first communication unit (3) is configured to:
transmit a subscription request (SubReq) for subscribing to a topic (T1) for receiving messages referring to said topic (T1), wherein the confidentiality group management unit (7) is configured to:
execute a verification scheme for obtaining a verification result, wherein the verification result indicates whether the first communication unit (3) is a participant or an authority of a confidentiality group (CG_T1) specific for the subscribed topic (T1),
wherein the first communication unit (3) is further configured to:
receive, in response to the transmitted subscription request (SubReq), a cryptographically secured message (2) referring to the subscribed topic (T1), wherein a participant or an authority of the confidentiality group (CG_T1) is configured to obtain the cryptographically secured message (2) by performing an encryption scheme for encrypting a message by means of a cryptographic material, and
if the verification result is positive and the first communication unit (3) is a participant or an authority of the confidentiality group (CG_T1), the authority of the confidentiality group (CG_T1) is configured to provide the cryptographic material to the first communication unit (3), wherein the first communication unit (3) is configured to:
perform a decryption scheme for decrypting the received cryptographically secured message (2) by means of the cryptographic material.

16. The system according to claim 15,
**characterized in**
**that** the first communication unit (3) or a second communication unit (4) is configured to:
generate the confidentiality group (CG_T1) during the runtime of the publish-subscribe system (1), and/or
wherein the confidentiality group management unit (7) is configured to:
change an authority for the confidentiality group (CG_T1) during the runtime of the publish-subscribe system (1).
